# EUROPÄISCHE PATENTSCHRIFT

(11) **EP 1 209 803 B1**
(45) Veröffentlichungstag und Bekanntmachung des Hinweises auf die Patenterteilung: **22.03.2006**
(21) Anmeldenummer: 01120225.6
(22) Anmeldetag: 23.08.2001
(51) Int. Cl.: H02K 19/36, H02K 11/00

(54) **Elektrische Maschine**
Electrical machine
Machine électrique

(30) Priorität: 01.09.2000 DE 10043059
(43) Veröffentlichungstag der Anmeldung: 29.05.2002
(73) Patentinhaber: ROBERT BOSCH GMBH, 70442 Stuttgart (DE)
(72) Erfinder: Csicser, Walter, 71701 Schwieberdingen (DE); Skala, Peter, 74321 Bietigheim-Bissingen (DE)

(56) Entgegenhaltungen:
- DE-A- 19 649 710
- DE-A- 19 852 388
- US-A- 3 750 951
- US-A- 4 427 150
- US-A- 4 500 772

## Beschreibung

### Stand der Technik

Die Erfindung geht aus von einer elektrischen Maschine, insbesondere einem Generator für Kraftfahrzeuge, nach dem Oberbegriff des Anspruchs 1.

Eine bekannte elektrische Maschine (EP 0 841 735 A1) ist als wassergekühlter Wechsel- oder Drehstromgenerator in Kraftfahrzeugen eingesetzt, wobei sein Kühlmantel in dem Kühlwasserkreislauf des Verbrennungsmotors integriert ist. Im Kühlwasserkreislauf sind weiterhin der Motorkühler, ein Luft-Wasser-Wärmetauscher für eine Heizvorrichtung, eine Umwälzpumpe sowie Regelventile zur Durchflusssteuerung des Kühlwassers angeordnet. Durch den wasserdurchströmten Kühlmantel kann die unvermeidbare Verlustleistung des Generators sehr effektiv abgeführt werden. Darüber hinaus entsteht der Vorteil, dass diese Verlustleistung - anders als bei luftgekühlten Generatoren - nicht verlorengeht, sondern von dem den Wärmetauscher durchströmenden Kühlwasser aufgenommen und im Wärmetauscher zur Verbesserung von dessen Heizleistung genutzt wird. Dies ist insbesondere bei direkt einspritzenden PKW-Diesel-Motoren mit hohem Wirkungsgrad von Vorteil, da bei diesem Motortyp die Aufheizung des Kühlwassers nur mäßig ist und eine wenig effiziente Innenraumheizung zuläßt.

Bei einem bekannten, kombinierten Bordnetz- und Heizgenerator mit Flüssigkeitskühlung für Fahrzeuge (US-A-4 500 772) sind in dem von Kühlflüssigkeit durchströmten Kühlmantel des Generators Lastwiderstände vorgesehen, die zum Zwecke der Heizung des Fahrzeuginnenraums im Heizbetrieb von dem Generator gespeist werden und ihre Verlustwärme über den Kühlmantel an die Kühlflüssigkeit abgeben. Der Generator hat eine dreiphasige Statorwicklung mit zwei parallel geschalteten Zweigen in jedem Wicklungsstrang bzw. in jeder Wicklungsphase. Durch Schaltmittel kann die Parallelschaltung aufgetrennt werden, so dass nunmehr zwei getrennte Statorwicklungen vorhanden sind, von denen die eine auf die Lastwiderstände geschaltet ist. Durch die Auftrennung der Parallelschaltung vergrößert sich der Widerstand beider getrennter Statorwicklungen, wodurch sich die Statorverlustleistung erhöht, so dass neben den Lastwiderständen auch der Stator zusätzliche Wärme an die den Kühlmantel durchströmende Kühlflüssigkeit abgibt.

### Vorteile der Erfindung

Die erfindungsgemäße elektrische Maschine mit dem Merkmalen des Anspruchs 1 hat den Vorteil, dass bei Nichterreichen einer gewünschten Innenraumtemperatur durch den Heiz-Wärmetauscher die Statorverlustleistung der Maschine gezielt erhöht werden kann, die dann über das Wärmeübertragungsmittel dem Heiz-Wärmetauscher zugeführt und dort zu einem sehr hohen Anteil direkt für die Innenraumheizung genutzt wird. Die Statorverlustleistung lässt sich sehr einfach dadurch manipulieren, dass die an einer Vollweg-Gleichrichterbrücke angeschlossene mehrphasige oder mehrsträngige Statorwicklung mindestens zwei parallele Zweige pro Phase oder Strang aufweist und Schaltmittel vorgesehen sind, die in jeder Phase oder in jedem Strang wahlweise mindestens einen Zweig parallel schalten oder von dem anderen Zweig trennen, wobei die mit der Gleichrichterbrücke verbundenen einen Strangenden der schaltbaren Zweigen von den nichtschaltbaren Zweigen in den Phasen oder Strängen abgetrennt und über je einen vorzugsweise als Diode ausgebildeten Gleichrichter auf einen gemeinsamen Abgriffspunkt gelegt sind und die Schaltmittel einen steuerbaren Schalter umfassen, der einerseits an diesem Abgriffspunkt und andererseits an einer der beiden Brückenausgangsklemmen der Gleichrichterbrücke angeschlossen ist.

Durch diese Maßnahmen wird beispielsweise bei einer dreiphasigen Statorwicklung eines Drehstromgenerators, die zwei parallele Zweige pro Phase aufweist, mit einem minimalen Zusatzaufwand von nur drei Dioden, einem Leistungs-MOSFET als Schalter und einer einfachen Ansteuerelektronik für den MOSFET ohne zusätzliche Lastwiderstände ausschließlich durch Abschalten des einen Zweigs pro Phase die Stator- oder Ständerverlustleistung im Leerlauf des Verbrennungsmotors von ca. 600 W auf ca. 1100 W gesteigert, wobei 5% Stromverluste des Generators in diesem Betriebszustand berücksichtigt sind.

Diese Verlustleistung, die noch mit zunehmender Drehzahl des Verbrennungsmotors und damit zunehmender Drehzahl des Generators ansteigt, ergibt eine Zusatz-Wärmeleistung zur Beheizung des Innenraums zwischen 500 W und 750 W die dem Wärmeübertragungsmittel zugeführt wird. Diesen Zahlenangaben ist beispielsweise ein Drehstromgenerator mit in Dreieck geschalteter Statorwicklung zugrunde gelegt, der für einen Nennstrom von 150 A ausgelegt ist.

Durch die in den weiteren Ansprüchen aufgeführten Maßnahmen sind vorteilhafte Weiterbildungen und Verbesserungen der im Anspruch angegebenen elektrischen Maschine möglich.

### Zeichnung

Die Erfindung ist anhand eines in der Zeichnung dargestellten Ausführungsbeispiels in der nachfolgenden Beschreibung näher erläutert. Es zeigen
- Fig. 1: einen Längsschnitt eines Generators für ein Kraftfahrzeug,
- Fig. 2: ein Schaltbild des mit dem Bordnetz des Fahrzeugs gekoppelten Generators in Fig. 1.

### Beschreibung des Ausführungsbeispiels

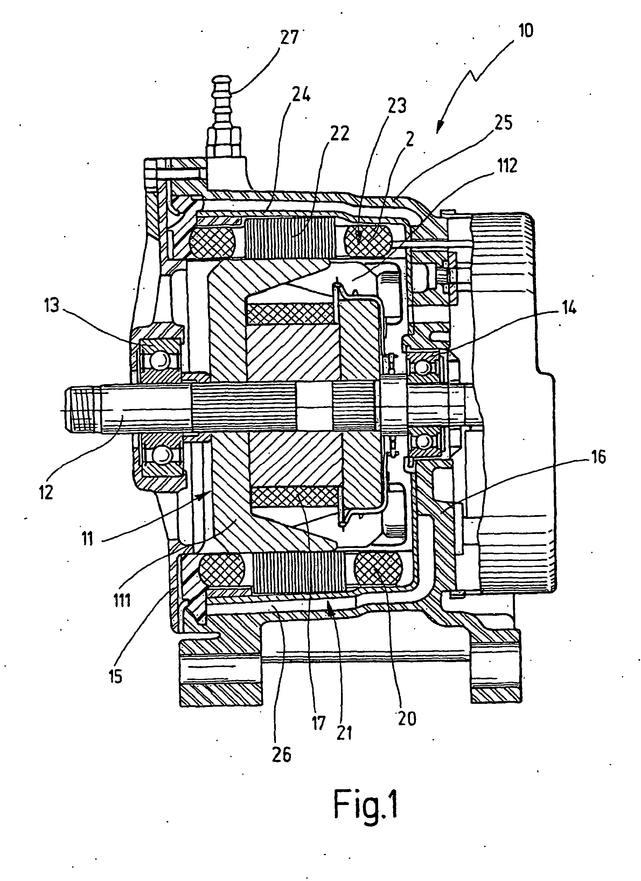

Der in Fig. 1 im Längsschnitt dargestellte wassergekühlte Generator 10 für ein Kraftfahrzeug als Ausführungsbeispiel einer allgemeinen elektrischen Maschine weist in bekannter Weise einen hier als sog. Klauenpolläufer ausgebildeten Rotor 11 auf, der drehfest auf einer Rotorwelle 12 sitzt, die mittels Drehlager 13, 14 in koaxialen Lagerschilden 15, 16 drehbar gehalten ist. Der aus zwei mit ihren Klauenpolen zahnartig ineinandergreifenden Klauenschalen 111, 112 zusammengesetzte Rotor 11 besitzt eine zwischen den Klauenschalen 111, 112 aufgenommene Erregerwicklung 17, an die über zwei auf der Rotorwelle 12 sitzende, hier nicht zu sehende Schleifringe eine Felderregerspannung angelegt ist.

Ein in bekannter Weise unter Belassung eines Luftspalts den Rotor 11 umschließender Ständer oder Stator 21 weist ein Statorlamellenpaket 22, auch Eisenblechpaket genannt, sowie eine Ständer- oder Statorwicklung 23 auf, die in bekannter Weise in im Statorlamellenpaket 22 eingebrachten Axialnuten einliegt. Die aus dem Statorlamellenpaket 22 auf beiden Stirnseiten vorstehenden Wicklungsköpfe 20 der Statorwicklung 23 sind in Fig. 1 schematisch im Schnitt dargestellt. Das Statorlamellenpaket 22 ist in ein topfförmiges Statorgehäuse 24 eingepreßt, das von einem Kühlmantel 25 umschlossen ist. Der Kühlmantel 25 ist ebenfalls topfförmig ausgebildet, wobei der Topfboden den einen Lagerschild 15 bildet. Der andere Lagerschild 16 ist auf den Topfrand aufgesetzt und schließt den Kühlmantel 25 stirnseitig ab. Zwischen dem Kühlmantel 25 und dem Statorgehäuse 24 ist eine flüssigkeistdicht abgeschlossene Ringkammer 26 eingeschlossen, die mit einem Zulaufstutzen 27 und einem nicht zu sehenden Ablaufstutzen in Verbindung steht.

Über die beiden Anschlußstutzen (Zulaufstutzen 27 und Ablaufstutzen) ist die Ringkammer 26 im Kühlmantel 25 in einen Kühlwasserkreislauf eines Verbrennungsmotors des Fahrzeugs einbezogen. Im Kühlwasserkreislauf ist neben dem Verbrennungsmotor und dem Generator 10 noch ein Motorkühler, ein luftdurchströmbarer Heiz-Wärmetauscher für eine Heizungs- oder Klimaanlage des Fahrzeugs, eine Umwälzpumpe sowie ein Thermostatventil angeordnet. Das Thermostatventil ist so ausgebildet, dass unterhalb einer vorgegebenen Betriebstemperatur des Verbrennungsmotors das vom Verbrennungsmotor erwärmte Kühlwasser nur durch den Heiz-Wärmetauscher fließt und mit Überschreiten der Betriebstemperatur der Motorkühler in den Umlauf des Kühlwassers einbezogen wird.

Um insbesondere bei einem als direkt einspritzender PKW-Dieselmotor mit hohem Wirkungsgrad ausgebildeten Verbrennungsmotor die wenig effektive Innenraumheizung des Fahrzeugs zu verbessern, ist der mit seinem Kühlmantel 25 an den Kühlwasserkreislauf angeschlossene Generator 10 so ausgebildet, daß durch interne, wahlweise aktivierbare Mittel dessen Wirkungsgrad verschlechtert werden kann und die dadurch im Generator entstehende, höhere Verlustleistung direkt an das Kühlwasser abgegeben wird, so daß dem Heiz-Wärmetauscher ein größeres Wärmepotential des Kühlwassers zur Verfügung steht. Diese Mittel werden durch eine Schaltungsänderung im Stator 21 realisiert.

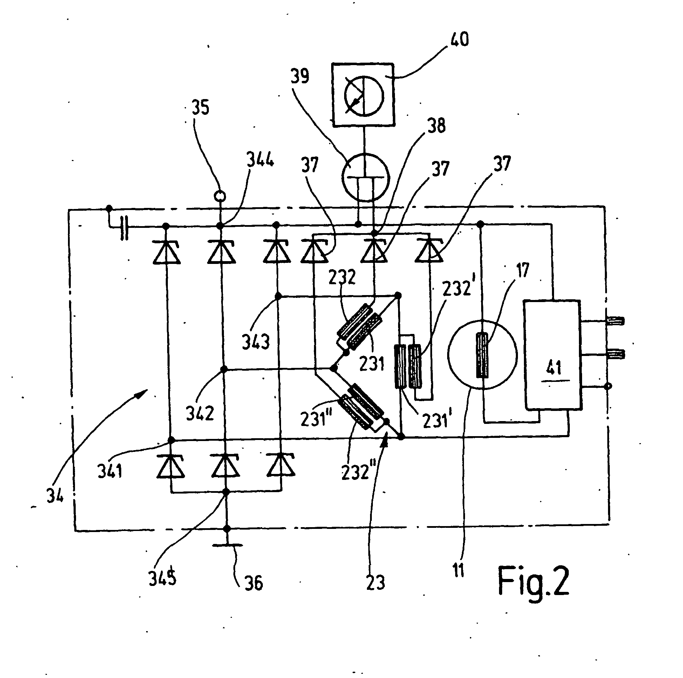

In Fig. 2 ist ein Blockschaltbild des über eine Gleichrichterbrücke 34 an das 12 V-Bordnetz angeschlossenen Generators 10 dargestellt. Die Ständer- oder Statorwicklung 23 ist dreiphasig ausgeführt und in Dreieck geschaltet. Der Rotor 11 mit Erregerwicklung 17 ist der Statorwicklung 23 zugeordnet dargestellt. Ein Regler 41 steuert die Felderregung. Die dreiphasige Statorwicklung 23 ist mit zwei parallelen Zweigen 231, 231', 231" und 232, 232', 232" pro Phase oder Strang ausgeführt. Die Dreieckspunkte sind an die Mittenabgriffe 341, 342, 343 der Dreiphasen-Vollweg-Gleichrichterbrücke 34 angeschlossen. Die beiden Ausgangsklemmen 344, 345 der Gleichrichterbrücke 34 sind an den Pluspol 35 und an den Minuspol 36 der Kraftfahrzeugbatterie gelegt.

Zwecks gezielter Verschlechterung des Wirkungsgrads zum Zwecke der Erhöhung der Verlustleistung des Stators 21 ist in jeder Phase oder jedem Strang der Statorwicklung 23 das mit dem Mittenabgriff der Gleichrichterbrücke 34 in Verbindung stehende Strangende der Zweige 232, 232' und 232" von den Strangenden der Zweige 231, 231' und 231'' abgetrennt und über jeweils eine Diode 37, die hier als Zenerdiode ausgebildet ist, auf einen gemeinsamen Abgriffspunkt 38 gelegt. Ein Feldeffekttransistor 39, vorzugsweise ein Leistungs-MOSFET ist einerseits an dem Abgriffspunkt 38 und andererseits an der mit dem Pluspol 35 verbundenen Ausgangsklemme 344 der Gleichrichterbrücke 34 angeschlossen. Der Feldeffekttransistor 39 wird von einer einfachen Steuerelektronik 40 angesteuert. Ist der Feldeffekttransistor 39 durchgesteuert, so sind die Zweige 232, 232' und 232'' den Zweigen 231, 231' und 231'' parallelgeschaltet. Die Statorwicklung 23 ist dann eine herkömmliche Dreiphasenwicklung mit zwei parallel geschalteten Zweigen pro Strang oder Phase. Wird der Feldeffekttransistor 39 gesperrt, so sind die parallelen Zweige 232, 232' und 232 " abgeschaltet. Dadurch steigt die Ständerverlustleistung in relativ großem Maße an. Diese erhöhte Verlustleistung des Generators 10 wird an das Kühlwasser im Kühlwasserkreislauf abgegeben und steht im Heiz-Wärmetauscher zu einem sehr hohen Anteil für die Innenraumheizung des Fahrzeugs zur Verfügung.

Die Erfindung ist nicht auf das vorstehend beschriebene Ausführungsbeispiel beschränkt. So kann die dreiphasige Statorwicklung 23 in Fig. 2 auch in Stern geschaltet sein. In diesem Fall wird der Sternpunkt für die parallelen Zweige 232, 232' und 232'' aufgelöst und die Strangenden dieser parallelen Zweige 232, 232' und 232" in gleicher Weise über eine Diode 37 an den Abgriffspunkt 38 gelegt.

Auch ist es nicht erforderlich, daß der Feldeffekttransistor 39 den Abgriffspunkt 38 mit der an dem Pluspol 35 der Fahrzeugbatterie liegenden Ausgangsklemme 344 verbindet. Alternativ kann der Abgriffspunkt 38 über den Feldeffekttransistor 39 auch an die mit dem Minuspol 36 verbundene Ausgangsklemme 345 gelegt werden. In diesem Fall ist die Polung der Dioden 37 zu invertieren.

Die Erfindung ist auch nicht auf eine dreiphasige oder dreisträngige Statorwicklung 23 beschränkt. Vielmehr kann jede beliebige Phasenzahl für die Statorwicklung 23 gewählt werden.

## Patentansprüche

1. Elektrische Maschine, insbesondere Generator für Kraftfahrzeuge, mit einem eine Statorwicklung (23) tragenden Stator (21), mit einem den Stator (21) umschließenden, von einem Wärmeübertragungsmittel durchströmbaren Kühlmantel (25), der in einem mindestens einen Wärmetauscher für Heizzwecke enthaltenden Kreislauf angeordnet ist, in dem das Wärmeübertragungsmittel umläuft, und mit im Stator (21) vorgesehenen, wahlweise aktivierbaren Mitteln zur Erhöhung der Statorverlustleistung, wobei die Mittel eine an einer Vollweg-Gleichrichterbrücke (34) angeschlossene, mehrphasige Statorwicklung (23) mit mindestens zwei parallelen Zweigen (231, 231' 231''; 232, 232' 232'') pro Phase und Schaltmittel aufweisen, die in jeder Phase wahlweise den mindestens einen Zweig (232, 232' 232'') dem anderen Zweig (231, 231', 231'') parallel schalten oder von dem anderen Zweig (231, 231' 231'') trennen, **dadurch gekennzeichnet, dass** die nicht mit der Gleichrichterbrücke (34) verbundenen Strangenden der schaltbaren Zweige (232, 232', 232'') von den nichtschaltbaren Zweigen (231, 231', 231'') in den Phasen abgetrennt und über je einen Gleichrichter (37) auf einen gemeinsamen Abgriffspunkt (38) gelegt sind und daß die Schaltmittel einen steuerbaren Schalter (39) aufweisen, der einerseits am Abgriffspunkt (38) und andererseits an einer der beiden Brückenausgangsklemmen (344) angeschlossen ist.

2. Maschine nach Anspruch 1, **dadurch gekennzeichnet, dass** der Schalter ein elektronischer Schalter, z.B. ein Feldeffekttransistor (39), vorzugsweise ein Leistungs-MOSFET, ist.

3. Maschine nach Anspruch 1 oder 2, **dadurch gekennzeichnet, dass** die Statorwicklung (23) dreiphasig und in Dreieck oder Stern geschaltet ist.

4. Maschine nach einem der Ansprüche 1 bis 3, **dadurch gekennzeichnet, dass** der Kreislauf des Wärmeübertragungsmittels der Kühlwasserkreislauf eines Verbrennungsmotors eines Kraftfahrzeugs und der darin angeordnete Wärmetauscher Teil einer Heizungs- oder Klimaanlage des Fahrzeugs ist.

## Claims

1. Electrical machine, in particular a generator for motor vehicles, having a stator (21) which is fitted with a stator winding (23), having a cooling jacket (25), through which a heat transmission means can flow and which surrounds the stator (21), is arranged in a circuit which contains at least one heat exchanger for heating purposes and in which the heat transmission means circulates, and having means which can be activated selectively and are provided in the stator (21) for increasing the stator power loss, with the means having a polyphase stator winding (23) which is connected to a full-wave rectifier bridge (34) and has at least two parallel arms (231, 231', 231"; 232, 232', 232") per phase and switching means which, in each phase, selectively connect the at least one arm (232, 232', 232'') in parallel with the other arm (231, 231', 231'') or disconnect it from the other arm (231, 231', 231''), **characterized in that** those section ends of the switchable arms (232, 232', 232'') which are not connected to the rectifier bridge (34) are disconnected from the non-switchable arms (231, 231', 231'') in the phases and are connected to a common tapping point (38) via a rectifier (37) in each case, and **in that** the switching means have a controllable switch (39) which is connected on one side to the tapping point (38) and on the other side to one of the two bridge output terminals (344).

2. Machine according to Claim 1, **characterized in that** the switch is an electronic switch, for example a field-effect transistor (39), and preferably a power MOSFET.

3. Machine according to Claim 1 or 2, **characterized in that** the stator winding (23) is a three-phase winding and is connected in delta or star.

4. Machine according to one of Claims 1 to 3, **characterized in that** the circuit of the heat transmission means is the cooling water circuit of an internal combustion engine in a motor vehicle, and the heat exchanger which is arranged in this circuit is part of a heating or climate-control system in the vehicle.

## Revendications

1. Machine électrique, notamment un générateur pour véhicules, comprenant
- un stator (21) portant un bobinage (23),
- une chemise de refroidissement (25), pouvant être parcourue par un fluide caloporteur, entourant le stator (21), disposée dans un circuit dans lequel circule le fluide caloporteur, comportant au moins un échangeur de chaleur à des fins de chauffage,
- des moyens prévus dans le stator (21), activables à volonté, pour augmenter sa puissance dissipée, ces moyens présentant un bobinage (23) polyphasé, raccordé à un pont redresseur à deux alternances (34), avec au moins deux branches parallèles (231, 231', 231" ; 232, 232', 232") par phase, et
- des moyens de commutation qui, dans chaque phase, soit connectent en parallèle au moins l'une des branches (232, 232', 232") de l'autre branche (231, 231', 231"), ou la déconnectent de l'autre branche (231, 231', 231'),
**caractérisée en ce que**
les extrémités du faisceau d'enroulement des branches commutables (232, 232', 232") qui ne sont pas raccordées au pont redresseur (34) sont déconnectées des branches non commutables (231, 231', 231") dans les phases, et sont appliquées chacune à l'aide d'un redresseur (37) à un point de branchement (38) commun, et les moyens de commutation présentent un commutateur (39) pouvant être commandé, raccordé d'une part au point de branchement (38) et d'autre part à l'une des deux bornes de sortie du pont (344).

2. Machine selon la revendication 1,
**caractérisée par**
un commutateur électronique, par exemple un transistor à effet de champ (39), de préférence un transistor MOSFET de puissance.

3. Machine selon la revendication 1 ou 2,
**caractérisée en ce que**
le bobinage de stator (23) est triphasé et monté en triangle ou en étoile.

4. Machine selon l'une des revendications 1 à 3,
**caractérisée en ce que**
le circuit du fluide caloporteur du circuit de refroidissement d'un moteur à combustion interne d'un véhicule, ainsi que la partie de l'échangeur de chaleur qui y est placée, est un chauffage ou une climatisation du véhicule.
